# EUROPEAN PATENT APPLICATION

(11) **EP 0 584 608 A1**
(43) Date of publication of application: **02.03.1994**
(21) Application number: 93112571.0
(22) Date of filing: 05.08.1993
(51) Int. Cl.: B29D 30/48

(54) **Method and unit for producing annular elements of elastomeric material for road vehicle tires**

(30) Priority: 28.08.1992 IT TO920717
(71) Applicant: BRIDGESTONE CORPORATION, Tokyo 104 (JP)
(72) Inventor: Minaudo, Diego, I-00125 Roma (IT)
(74) Representative: Jorio, Paolo

(57) **Abstract**

A substantially flat annular element (2) of elastomeric material for a road vehicle tire is produced by feeding a mold (3) for the annular element (2) along a path (10) extending through a loading station (38), wherein the mold (3) is loaded with a green annular strip (56) of elastomeric material, a molding station (37), wherein an upper mold (25) is pressed on to the mold (3) for a given length of time, and an unloading station (39), wherein the molded annular element (2) is removed from the mold (3); the green annular strip (56) being formed by rotating the mold (3) about its axis (51), and by simultaneously feeding a continuous strip (46) of elastomeric material directly into the mold (3).

## Description

The present invention relates to a method of producing annular elements of elastomeric material for road vehicle tires.

More specifically, the present invention relates to a method of producing substantially flat annular elements, such as the bead-bead filler assemblies and sidewalls of road vehicle tires.

At present, annular elements of the aforementioned type are normally produced by first forming a strip of elastomeric material of the same section as the annular element being produced, and by cutting the strip into portions, the opposite ends of each of which are then spliced to form the finished annular element.

Such methods present numerous drawbacks, mainly due to the necessity of producing and storing large quantities of the basic strip, which is normally produced using extruders with specially designed, high-cost dies. Moreover, the finished annular elements invariably present a discontinuous portion consisting of the splice, which may impair the uniformity of the finished tire.

It is an object of the present invention to provide a method of producing annular elements of the type described above, designed to overcome the aforementioned drawbacks.

According to the present invention, there is provided a method of producing annular elements of elastomeric material for road vehicle tires, characterized by the fact that it comprises stages consisting in feeding a mold for said annular element along a path extending through a loading station, wherein a curved green strip of elastomeric material is loaded inside the mold; a molding station, wherein an upper mold is pressed on to the mold for a given length of time; and an unloading station, wherein the molded annular element is removed from the mold; said green, preferably annular, strip being formed by rotating the mold about its axis in said loading station, and by simultaneously and continuously feeding directly into the mold, preferably by extrusion, a predetermined quantity of elastomeric material in the form of a strip of any section and preferably of substantially the same length as the annular element being produced.

The above method thus provides for eliminating the production and storage of large quantities of material, by virtue of the required amount being produced as needed. Moreover, by virtue of the annular strip being green and the finished section being achieved by molding, the above method provides, not only for producing a spliceless annular element, but also for eliminating the need for a precise section of the basic strip, thus enabling considerable saving in terms of extruder design.

According to a preferred embodiment of the above method, the annular element is a bead-bead filler assembly, the mold being fed through a station wherein it is loaded with an annular bead.

Preferably, said path is an annular path along which are fed successively and in steps a number of molds at least equal to the number of stations; and each mold is preferably fed through the stations along straight portions of said path.

The present invention also relates to a unit for producing annular elements of elastomeric material for road vehicle tires.

According to the present invention, there is provided a unit for producing annular elements of elastomeric material for road vehicle tires, characterized by the fact that it comprises at least one mold for said annular element; means for supporting said mold and defining a path along which said mold is fed in a given direction; a loading station, molding station and unloading station located successively along said path; and thrust means for feeding said mold in steps through said stations and in said direction; the molding station comprising an upper mold, and a press for pressing the upper mold on to said mold for a given length of time; and the loading station comprising means, in turn preferably comprising extruding means, for feeding into the mold a given quantity of elastomeric material in the form of a strip of any section, and drive means for rotating the mold about its axis and forming in the mold, from said strip, a curved green strip of elastomeric material preferably annular in shape and substantially of the same length as the annular element being produced.

A non-limiting embodiment of the present invention will be described by way of example with reference to the accompanying drawings, in which:
Fig.1 shows a view in perspective of a preferred embodiment of a unit in accordance with the present invention;
Fig.2 shows a larger-scale, partially sectioned plan view, with parts removed for simplicity, of a detail on the Fig.1 unit;
Fig.3 shows a larger-scale section, with parts removed for simplicity, along line III-III in Fig.2.

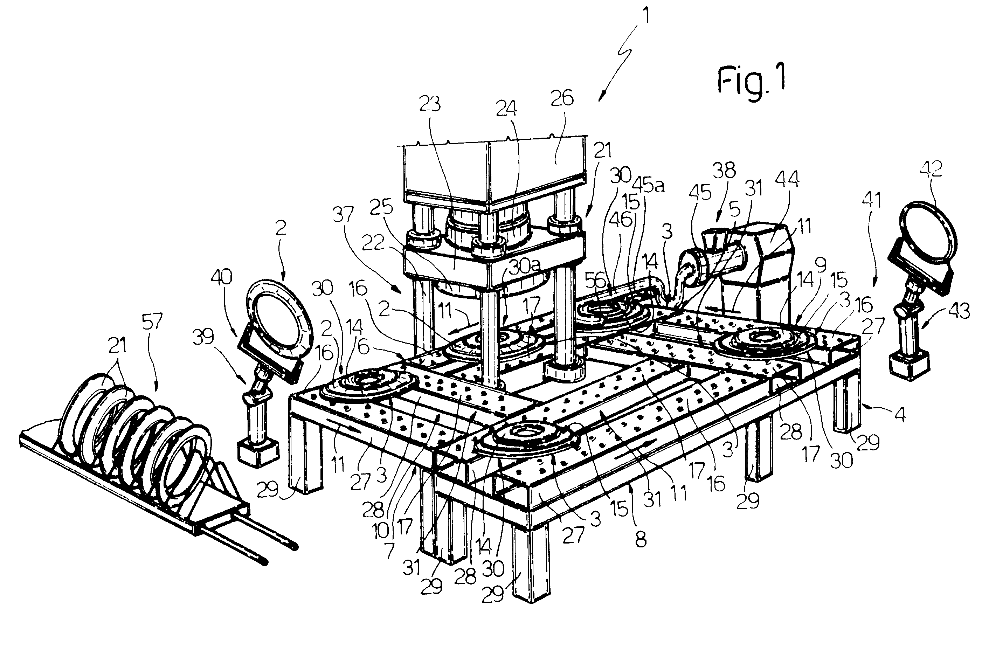

Number 1 in Fig.1 indicates a unit for producing annular elements 2 of elastomeric material, consisting in the example shown of bead-bead filler assemblies for road vehicle tires.

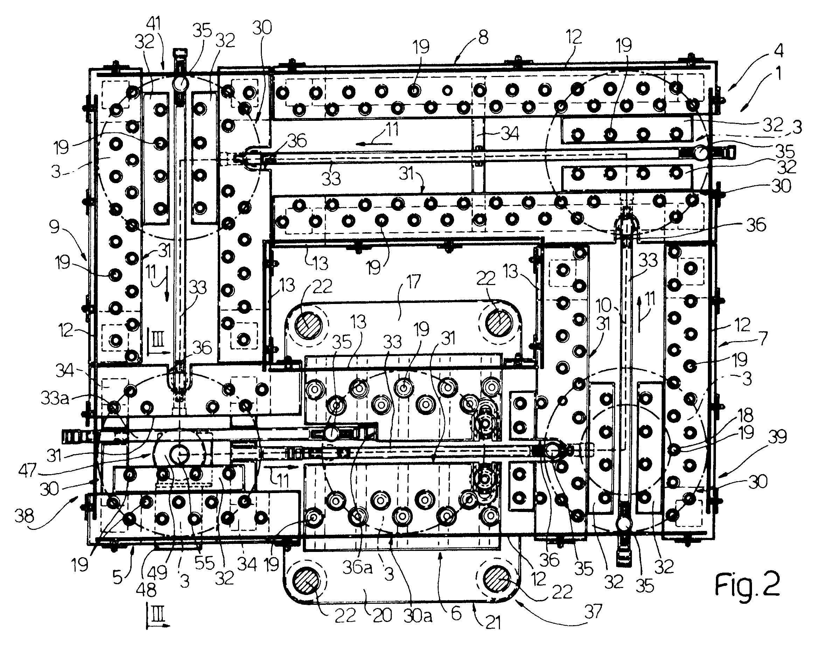

Unit 1 comprises a number of metal molds 3 for elements 2; and a base 4 defined by a number of beds 5, 6, 7, 8 and 9 in turn defining an annular path 10 along which molds 3 are fed in steps in direction 11 as described in detail later on. More specifically (Fig.2), path 10 is in the form of a quadrangle having a first side defined by beds 5 and 6 aligned with each other; a second side defined by bed 7 perpendicular to beds 5 and 6; a third side defined by bed 8 parallel to beds 5 and 6; and a fourth side defined by bed 9 parallel to bed 7.

Molds 3 fed along path 10 are equal in number to beds 5-9, and are guided laterally along path 10 by outer lateral walls 12 and inner lateral walls 13 (Fig.2) extending upwards from beds 5-9. In the example shown, each mold 3, when viewed from above, is round in shape, with a diameter slightly smaller than the clearance, at each point along path 10, between walls 12 and 13, and presents a raised round central portion 14 surrounded by a lower annular trough 15 for receiving a respective element 2.

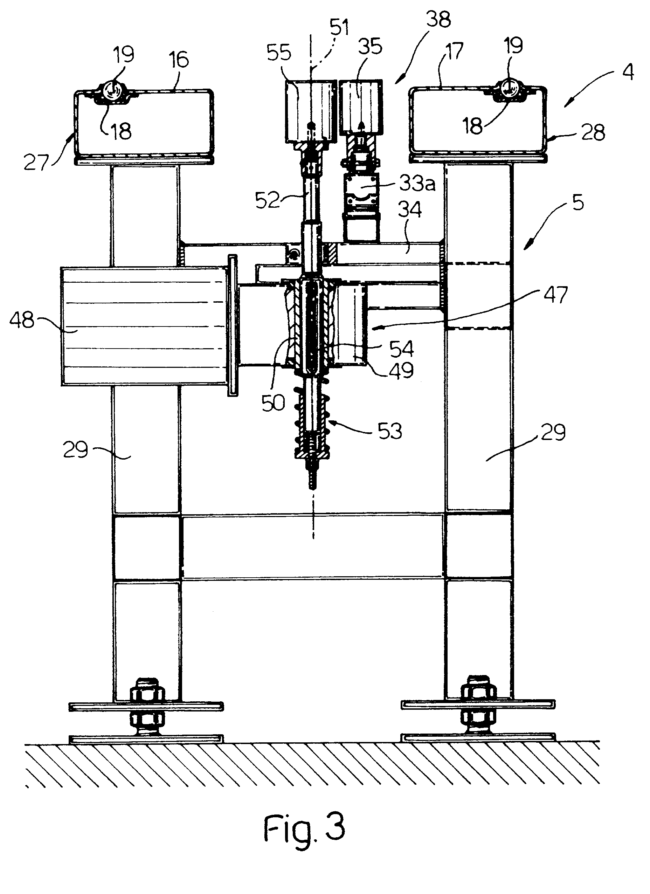

Each of beds 5-9 comprises an upper portion defined by two plates 16 and 17 parallel to each other and to direction 11, and located respectively outwards and inwards of path 10. As shown more clearly in Fig.3, each plate 16, 17 presents a number of seats 18 for respective balls 19, each of which engages in rotary manner and projects from the top of seat 18 so as to define, with the other balls 19, a rolling bed for molds 3.

As shown more clearly in Fig.2, plates 16 and 17 of bed 6 are fitted to the upper surface of the central portion of base 20 of a known press 21 comprising four uprights 22 extending upwards from base 20 and outside bed 6, and supporting a crosspiece 23 (Fig.1) through which slides a pressure element 24. The bottom end of pressure element 24 is fitted with an upper mold 25 cooperating selectively with molds 3 for molding elements 2, and operated by a known hydraulic device 26 supported on crosspiece 23. Plates 16 and 17 of the other beds 5, 7, 8 and 9, on the other hand, are defined by the upper plates of respective rectangular sections 27 and 28 supported on respective uprights 29.

Each of beds 5-9 defines a hold station 30 wherein molds 3 from the upstream bed (in relation to direction 11) are arrested successively. Plates 16 and 17 of each bed 5-9 define a channel 31, which is open at the input end (in relation to direction 11), and closed at the output end by plate 17 of the downstream bed, with the exception of channels 31 of beds 5 and 6, which are aligned and communicate with each other. At stations 30 of beds 5, 7, 8 and 9, channel 31 is partially limited widthwise by at least one additional supporting plate 32 (Fig.2) projecting from respective plate 16, 17 and also provided with respective seats 18 and balls 19.

Stations 30 of beds 5, 7, 8 and 9 are all located at the input end of the bed, whereas that of bed 6 (numbered 30a) is located centrally between uprights 22. For each pair of adjacent stations 30, each mold 3 is transferred, in direction 11, from a first station 30 to a second downstream station 30 by means of a horizontal pneumatic cylinder 33, preferably without a piston rod, extending along channel 31 and supported on respective cross members 34 (Fig.3). Each cylinder 33 presents a slider consisting of a vertical magnet 35 having the top end substantially flush with the rolling bed defined by balls 19, and which travels along the bed of said first station 30, between a peripheral upstream point in said first station 30 and a corresponding point in said second station 30. As it travels from the first to the second station 30, each magnet 35 thus travels through substantially the whole of first station 30, but engages only a peripheral portion of second station 30.

Of each pair of adjacent cylinders 33 located respectively upstream and downstream of each station 30 along path 10, therefore, the upstream cylinder 33 cooperates solely with a peripheral portion of station 30, whereas the other extends through the whole of station 30. Cylinders 33 in each said pair are positioned perpendicular to each other, with the exception of cylinder 33 of bed 5, hereinafter referred to as cylinder 33a, which is positioned parallel to and partly to the side of cylinder 33 of bed 6.

As shown in Fig.2, at the end of its travel along respective cylinder 33, each magnet 35 is housed inside a cavity 36 formed transversely on the lateral edge of plate 17 of the next bed in downstream station 30; whereas cavity 36 of magnet 35 of cylinder 33a, hereinafter referred to as cavity 36a, is formed axially on the end of plate 17 of bed 6.

Each pair of adjacent magnets 35 thus provides for feeding molds 3 from one station 30 to the next without ever interfering with each other, by virtue of one traveling through respective station 30, and the other engaging only a peripheral portion of the same station located to the side of or perpendicular to the portion engaged by the first.

As shown in Fig.1, station 30a forms part of a molding station 37 also comprising press 21 and upper mold 25, and is located between two stations 30, a first of which, located upstream from station 30a in direction 11, forms part of a station 38 for loading elastomeric material as described later on, and the second of which forms part of an unloading station 39 wherein the finished element 2 is removed from mold 3 by means of a known unloading device 40. In the example shown, station 30 of loading station 38 is also preceded by a station 30 forming part of a station 41 wherein a bead 42 is loaded into each mold 3 by means of a known loading device 43.

As shown in Fig.1, loading station 38 comprises a known extruder 44, the die 45 of which communicates with a known device 45a for feeding a strip 46 of elastomeric material on to a portion of trough 15 of mold 3 in station 30 of loading station 38. Whereas strip 46 is supplied continuously by extruder 44, device 45a is step operated for feeding into mold 3, at each step, a portion of strip 46 of given weight, of any section whatsoever, and preferably of the same length as trough 15 of mold 3.

As shown in Fig.3, loading station 38 also comprises a drive device 47 located centrally in station 30 and in turn comprising a motor 48 and a reduction gear 49 having a tubular through output shaft 50 rotating anticlockwise (in Fig.2) about a vertical axis 51 coaxial with mold 3 in station 30 of loading station 38. Motor 48 is connected integral with an upright 29 of bed 5, and shaft 50 is fitted through with a vertical shaft 52 locked axially and angularly in relation to shaft 50 by means of a known elastic axial lock device 53 and a key 54. The top end of shaft 52 is fitted with a cylindrical magnet 55, the upper surface of which is flush with the rolling bed defined by balls 19 of bed 5.

Operation of unit 1 will now be described relative to the production, as in the example shown, of elements 2 consisting of a bead-bead filler assembly, and, for the sake of simplicity, relative to a single mold 3. More specifically, operation of unit 1 will be described as of when mold 3, after being unloaded, is fed by cylinder 33 of bed 8 to station 30 of loading station 41 at the input end of bed 9.

When arrested in station 41, mold 3 is loaded by device 43 with a metal bead 42, which is fitted by device 43 on to central portion 14 of mold 3 so as to engage the inner edge of trough 15. Mold 3, complete with bead 42, is then engaged by magnet 35 of cylinder 33 of bed 9 and transferred to station 30 of loading station 38 where it is positioned with trough 15 beneath the output end of supply device 45a, and is engaged by magnet 55 of drive device 47, which is activated for rotating mold 3 at substantially constant speed about axis 51. Upon mold 3 reaching a constant rotation speed, device 45a is activated for feeding strip 46 of elastomeric material into mold 3, which strip 46 adheres to the bottom of trough 15 and, as mold 3 is rotated about axis 51, is fed along trough 15 to form a curved green strip 56 (Fig.1) of at least the same weight as the elastomeric material in element 2, and which preferably, but not necessarily, occupies the whole of trough 15 so that it is annular in shape and substantially the same length as element 2 being produced.

When devices 47 and 45a are arrested, mold 3, complete with strip 56 and bead 42, is transferred by cylinder 33a to station 30a of molding station 37, where it is fitted by press 21 with upper mold 25 for forming element 2. Mold 3 is then transferred by cylinder 33 of bed 6 to station 30 of unloading station 39 where finished element 2 is removed from mold 3 by unloading device 40 and loaded on to a known storage rack 57. The empty mold 3 is then transferred once more to station 41 by cylinders 33 of beds 7 and 8.

Operation of unit 1 for producing elements 2 consisting of a bead-bead filler assembly as described above also applies substantially to elements 2 consisting, for example, of the annular sidewall of the tire. In this case, however, operation as described above may vary slightly in the event the tire is produced using a forming mold of the type described in Italian Patent Application n. TO91-A/000820 to which full reference is made herein in the interest of full disclosure. In this case, in fact, molds 3 would consist of the annular lateral walls of respective forming molds, and, instead of traveling along the whole of path 10, would be loaded on to base 4 at loading station 41 and unloaded, together with elements 2, at unloading station 39 or at the next station 30 in direction 11.

## Claims

1. A method of producing annular elements (2) of elastomeric material for road vehicle tires, characterized by the fact that it comprises stages consisting in feeding a mold (3) for said annular element (2) along a path (10) extending through a loading station (38), wherein a curved green strip (56) of elastomeric material is loaded inside the mold (3); a molding station (37), wherein an upper mold (25) is pressed on to the mold (3) for a given length of time; and an unloading station (39), wherein the molded annular element (2) is removed from the mold (3); said green strip (56) being formed by rotating the mold (3) about its axis (51) in said loading station (38), and by simultaneously and continuously feeding directly into the mold (3) a predetermined quantity of elastomeric material in the form of a strip (46) of any section.

2. A method as claimed in Claim 1, characterized by the fact that said strip (46) is extruded into said mold (3).

3. A method as claimed in Claim 1 or 2, characterized by the fact that said green strip (56) is annular in shape and substantially the same length as the annular element (2) being produced.

4. A method as claimed in any one of the foregoing Claims, characterized by the fact that said annular element (2) is a bead-bead filler assembly; said mold (3) being fed through a station (41) wherein it is loaded with an annular bead (42).

5. A method as claimed in any one of the foregoing Claims, characterized by the fact that said path (10) is an annular path (10) along which are fed successively and in steps a number of said molds (3) at least equal in number to said stations (37, 38, 39, 41).

6. A method as claimed in any one of the foregoing Claims, characterized by the fact that said mold (3) is fed through said stations (37, 38, 39, 41) along straight portions (5-9) of said path (10).

7. A unit for producing annular elements (2) of elastomeric material for road vehicle tires, characterized by the fact that it comprises at least one mold (3) for said annular element (2); means (5-9) for supporting said mold (3) and defining a path (10) along which said mold (3) is fed in a given direction (11); a loading station (38), molding station (37) and unloading station (39) located successively along said path (10); and thrust means (33) for feeding said mold (3) in steps through said stations (37, 38, 39) and in said direction (11); the molding station (37) comprising an upper mold (25), and a press (21) for pressing the upper mold (25) on to said mold (3) for a given length of time; and the loading station (38) comprising means (44, 45a) for feeding into the mold (3) a given quantity of elastomeric material in the form of a strip (46) of any section, and drive means (47) for rotating the mold (3) about its axis (51) and forming in the mold (3), from said strip (46), a curved green strip (56) of elastomeric material.

8. A unit as claimed in Claim 7, characterized by the fact that said feeding means (44, 45a) comprise means (44) for extruding said strip (46).

9. A unit as claimed in Claim 7 or 8, characterized by the fact that said green strip (56) is annular in shape and substantially the same length as the annular element (2) being produced.

10. A unit as claimed in any one of the foregoing Claims from 7 to 9, characterized by the fact that said path (10) is an annular path; said thrust means (33) providing for feeding successively and in steps along said path (10) a number of said molds (3) at least equal in number to said stations (37, 38, 39).

11. A unit as claimed in any one of the foregoing Claims from 7 to 10, characterized by the fact that said path (10) comprises a number of straight portions (5-9); at least some of said stations (37, 38, 39, 41) connecting respective pairs of adjacent said straight portions (5-9).

12. A unit as claimed in Claim 11, characterized by the fact that each said straight portion (5-9) is defined by a respective bed (5-9) comprising two parallel, coplanar plates (16, 17); each said plate (16)(17) presenting a number of balls (19) defining a rolling bed for said mold (3).

13. A unit as claimed in Claim 12, characterized by the fact that, for each said straight portion (5-9), said thrust means (33) comprise a cylinder (33) comprising a slider in turn comprising a magnet (35) substantially coplanar with the rolling bed of said bed (5-9).

14. A unit as claimed in Claim 13, characterized by the fact that, in each pair of successive cylinders (33) along said path (10) and connected by one of said stations (37, 38, 39), the one upstream from said station (37, 38, 39) in said direction (11) cooperates solely with a peripheral portion of the station (37, 38, 39), whereas the other cylinder (33) extends through the whole of said station (37, 38, 39).

15. A unit as claimed in any one of the foregoing Claims from 7 to 14, characterized by the fact that said drive means (47) comprise a powered shaft (52) coaxial with and rotating about said axis (51); and a magnet (55) integral with said shaft (52) and mating with said mold (3) in said loading station (38).
